# EUROPÄISCHE PATENTSCHRIFT

(11) **EP 4 196 385 B1**
(45) Veröffentlichungstag und Bekanntmachung des Hinweises auf die Patenterteilung: **21.01.2026**
(21) Anmeldenummer: 21740091.0
(22) Anmeldetag: 09.07.2021
(51) Int. Cl.: B62D 35/00, B62D 35/02

(54) **UNTERBODENVERKLEIDUNGSELEMENT FÜR EIN FAHRZEUG SOWIE ANORDNUNG EINER UNTERBODENVERKLEIDUNG AN EINEM AUFBAU EINES FAHRZEUGS**
UNDERBODY CLADDING ELEMENT FOR A VEHICLE AND ARRANGEMENT OF AN UNDERBODY CLADDING ELEMENT ON A BODY OF A VEHICLE
ÉLÉMENT DE REVÊTEMENT DE DESSOUS DE CAISSE POUR UN VÉHICULE ET AGENCEMENT D'UN ÉLÉMENT DE REVÊTEMENT DE DESSOUS DE CAISSE SUR UNE CAISSE D'UN VÉHICULE

(30) Priorität: 11.08.2020 DE 102020004886
(43) Veröffentlichungstag der Anmeldung: 21.06.2023
(73) Patentinhaber: Mercedes-Benz Group AG, 70372 Stuttgart (DE)
(72) Erfinder: WIGGEN, Stefan, 71272 Renningen (DE); WITTMANN, Francois, 71063 Sindelfingen (DE)
(74) Vertreter: Novagraaf Group
(86) Internationale Anmeldenummer: PCT/EP2021/069165
(87) Internationale Veröffentlichungsnummer: WO 2022/033784

(56) Entgegenhaltungen:
- EP-B1- 2 435 288
- DE-A1- 4 319 281
- DE-U- 1 862 696
- US-A1- 2018 170 457

## Beschreibung

Die Erfindung betrifft ein Unterbodenverkleidungselement für ein Fahrzeug gemäß dem Oberbegriff des Anspruchs 1. Des Weiteren betrifft die Erfindung eine Anordnung einer Unterbodenverkleidung an einem Aufbau eines Fahrzeugs.

Die DE 10 2013 219 549 A1 offenbart ein Abdeckelement für eine Unterbodenverkleidung zum zumindest teilweisen Abdecken eines Unterbodens eines Kraftwagens. Das Abdeckelement weist wenigstens einen ersten Bereich und wenigstens einen sich an den ersten Bereich anschließenden und gegenüber dem ersten Bereich weicheren, elastisch verformbaren zweiten Bereich auf. Des Weiteren ist aus der DE 201 16 286 U1 eine Verkleidung für einen Unterboden eines Kraftfahrzeugs bekannt. Die EP 2 435 288 B1 offenbart ein Fahrzeug mit einer Luftleiteinrichtung. Des Weiteren ist der DE 10 2009 040 678 A1 eine Luftleiteinrichtung für einen Kraftwagen als bekannt zu entnehmen.

Aus der gattungsbildenden DE 10 2015 005 013 A1 geht eine Luftleiteinrichtung für einen Fahrwerkslenker hervor, welche flächig ausgebildet ist und den Fahrwerkslenker in Einbaulage zumindest abschnittsweise unterquert, wobei während des bestimmungsgemäßen Gebrauchs der Luftleiteinrichtung ein Luftstrom entlang einer Oberfläche der Luftleiteinrichtung fließt, der sich an einer einen sich fortlaufend wechselnden räumlichen Verlauf aufweisenden Abströmkante von der Luftleiteinrichtung ablöst.

Die DE 43 19 281 A1 offenbart ein Unterbodenverkleidungselement gemäß dem Oberbegriff des Anspruchs 1.

Aufgabe der vorliegenden Erfindung ist es, ein Unterbodenverkleidungselement für ein Fahrzeug sowie eine Anordnung einer Unterbodenverkleidung an einem Aufbau eines Fahrzeugs zu schaffen, sodass eine besonders vorteilhafte Aerodynamik des Fahrzeugs realisiert werden kann.

Diese Aufgabe wird erfindungsgemäß durch ein Unterbodenverkleidungselement mit den Merkmalen des Anspruchs 1, sowie durch eine Anordnung einer Unterbodenverkleidung an einem Aufbau eines Fahrzeugs mit den Merkmalen des Anspruchs 9 gelöst. Vorteilhafte Ausgestaltungen mit zweckmäßigen Weiterbildungen der Erfindung sind Gegenstand der abhängigen Ansprüche.

Ein erster Aspekt der Erfindung betrifft ein Unterbodenverkleidungselement für ein Fahrzeug, insbesondere Personenkraftwagen. Das Unterbodenverkleidungselement wird somit in vollständig hergestelltem Zustand des Fahrzeugs genutzt, um einen auch als Boden bezeichneten Unterboden des Fahrzeugs in Fahrzeughochrichtung nach unten hin zumindest teilweise zu verdecken und somit zu verkleiden. Der Unterboden wird dabei durch einen beispielsweise als selbsttragende Karosserie ausgebildeten Aufbau des Fahrzeugs gebildet, wobei der Unterboden einen auch als Fahrgastraum bezeichneten Innenraum des Fahrzeugs in Fahrzeughochrichtung nach unten hin zumindest teilweise, insbesondere zumindest überwiegend oder vollständig, begrenzt.

Das Unterbodenverkleidungselement weist einen Luftleitbereich auf, welcher an seinem in Fahrzeuglängsrichtung gesehen hinteren Ende mit einer Strömungsabrisskante versehen ist, an der sich bei Vorwärtsfahrt des Fahrzeugs eine entlang des Luftleitbereichs geleitete Luftströmung definiert ablöst. Dabei ist zumindest ein Längenbereich der Strömungsabrisskante in einer projiziert auf eine durch die Fahrzeugquerrichtung (y-Richtung im Fahrzeugkoordinatensystem) und die Fahrzeuglängsrichtung (x-Richtung im Fahrzeugkoordinatensystem) aufgespannten Ebene ungerade ausgebildet ist. Durch die beschriebene ungleichförmige Gestaltung der Strömungsabrisskante kann der Strömungswiderstand reduziert und die nachfolgende Scherschicht stabilisiert werden.

Das Unterbodenverkleidungselement weist einen ersten Luftleitbereich und einen zweiten Luftleitbereich auf, welcher sich insbesondere in Einbaulage des Unterbodenverkleidungselements in Fahrzeuglängsrichtung nach hinten, insbesondere direkt, an den ersten Luftleitbereich anschließt. Das Unterbodenverkleidungselement nimmt dabei in seiner Einbaulage in vollständig hergestelltem Zustand des Fahrzeugs und somit dann ein, wenn das Unterbodenverkleidungselement beziehungsweise eine das Unterbodenverkleidungselement umfassende Unterbodenverkleidung zumindest mittelbar, insbesondere direkt, an dem Aufbau gehalten und dabei insbesondere in Fahrzeughochrichtung unterhalb des Unterbodens angeordnet ist. Unter dem Merkmal, dass sich der zweite Luftleitbereich in Fahrzeuglängsrichtung nach hinten hin direkt an den ersten Luftleitbereich anschließt, ist insbesondere zu verstehen, dass in Fahrzeuglängsrichtung zwischen dem ersten Luftleitbereich und dem zweiten Luftleitbereich kein weiterer Bereich des Unterbodenverkleidungselements angeordnet ist. Der zweite Luftleitbereich ist von dem ersten Luftleitbereich abgewinkelt und erstreckt sich in Einbaulage des Unterbodenverkleidungselements in Fahrzeuglängsrichtung von vorne unten nach hinten oben von dem ersten Luftleitbereich weg. Das heißt, dass der zweite Luftleitbereich einen entgegen der Vorwärtsfahrtrichtung des Fahrzeugs, also einen in Richtung des Fahrzeughecks gesehen ansteigenden Verlauf, analog eine Rampe, aufweist. Somit wird beispielsweise Luft, die bei einer Vorwärtsfahrt des Fahrzeugs entlang des Unterbodenverkleidungselements und dabei entlang der Luftleitbereiche strömt, insbesondere auf einer dem Unterboden abgewandten und in Fahrzeughochrichtung nach unten weisenden Seite des Unterbodenverkleidungselements, mittels des als Rampe fungierenden, zweiten Luftleitbereichs in Fahrzeughochrichtung nach oben, das heißt insbesondere in Fahrzeuglängsrichtung von vorne unten nach hinten oben geführt. Die entlang der Luftleitbereiche beziehungsweise des Unterbodenverkleidungselements strömende Luft wird auch als Luftströmung bezeichnet oder bildet eine Luftströmung, welche mittels der Luftleitbereiche gezielt und vorteilhaft geführt werden kann.

Unter den Merkmalen, dass der zweite Luftleitbereich von dem ersten Luftleitbereich abgewinkelt ist und sich bei in Fahrzeuglängsrichtung von vorne unten nach hinten oben von dem ersten Luftleitbereich weg erstreckt, ist insbesondere zu verstehen, dass ein in Fahrzeuglängsrichtung vorderes Ende des zweiten Luftleitbereichs in Fahrzeughochrichtung weiter unten angeordnet ist, als ein in Fahrzeuglängsrichtung hinteres Ende des zweiten Luftleitbereichs. In Fahrzeuglängsrichtung von vorne nach hinten betrachtet beginnt der zweite Luftleitbereich an seinem vorderen Ende, an welchem beispielsweise der erste Luftleitbereich endet. Außerdem endet der zweite Luftleitbereich an seinem hinteren Ende. Somit ist unter dem Merkmal, dass der zweite Luftleitbereich von dem ersten Luftleitbereich abgewinkelt ist, insbesondere zu verstehen, dass eine das vordere Ende mit dem hinteren Ende verbindende, gedachte Gerade sich beispielsweise schräg zum ersten Luftleitbereich beziehungsweise schräg zur Fahrzeuglängsrichtung und/oder schräg zur Fahrzeughochrichtung und dabei insbesondere schräg zu einer gedachten, durch die Fahrzeuglängsrichtung in Fahrzeugquerrichtung aufgespannten Ebene erstreckt. Dabei ist das hintere Ende des zweiten Luftleitbereichs in Fahrzeuglängsrichtung weiter hinten angeordnet als das vordere Ende des zweiten Luftleitbereichs.

Die Strömungsabrisskante folgt in Fahrzeuglängsrichtung nach hinten hin auf den zweiten Luftleitbereich, mithin in Fahrzeuglängsrichtung und dabei insbesondere entgegen der Vorwärtsfahrtrichtung des Fahrzeugs hinter dem zweiten Luftleitbereich, insbesondere hintere dem hinteren Ende des zweiten Luftleitbereichs, angeordnet ist. Grundsätzlich ist es denkbar, dass sich die Strömungsabrisskante in Fahrzeuglängsrichtung nach hinten direkt an den zweiten Luftleitbereich anschließt, worunter insbesondere zu verstehen ist, dass in Fahrzeuglängsrichtung zwischen dem zweiten Luftleitbereich und der Strömungsabrisskante kein weiterer Bereich des Unterbodenverkleidungselements angeordnet ist. Dabei ist es insbesondere denkbar, dass sich die Strömungsabrisskante in Fahrzeuglängsrichtung nach hinten hin direkt an das zweite Ende des zweiten Luftleitbereichs anschließt beziehungsweise an dem zweiten Ende des Luftleitbereichs angeordnet ist.

Um die Luft beziehungsweise die Luftströmung bei der Vorwärtsfahrt des Fahrzeugs besonders vorteilhaft ablösen zu können, insbesondere von dem Unterbodenverkleidungselement, ist es erfindungsgemäß weiterhin vorgesehen, dass die Strömungsabrisskante einen in Fahrzeughochrichtung nach unten gewölbten Grundkörper aufweist, so dass mittels der Strömungsabrisskante eine starke Richtungsänderung der Luftströmung in Fahrzeughochrichtung nach unten bewirkbar ist.

Außerdem ist zumindest ein Längenbereich der Strömungsabrisskante in einer beziehungsweise in der zuvor genannten, durch die Fahrzeugquerrichtung und die Fahrzeuglängsrichtung aufgespannten Ebene, bei in Fahrzeughochrichtung von unten nach oben erfolgender Draufsicht auf das Unterbodenverkleidungselement, ungerade ausgebildet. Hierunter ist insbesondere zu verstehen, dass zumindest der Längenbereich der Strömungsabrisskante in der durch die Fahrzeugquerrichtung und die Fahrzeuglängsrichtung aufgespannten und auch als x-y-Ebene bezeichneten Ebene einen ungeraden, das heißt von einem geraden beziehungsweise ebenen Verlauf abweichenden Verlauf aufweist. Insbesondere ist es vorzugsweise vorgesehen, dass die Strömungsabrisskante zumindest über ihre überwiegende, in Fahrzeugquerrichtung verlaufende Erstreckung, das heißt über mehr als die Hälfte ihrer in Fahrzeugquerrichtung verlaufenden Erstreckung in der x-y-Ebene einen ungeraden Verlauf aufweist. Wieder mit anderen Worten ausgedrückt ist unter dem Merkmal, dass die Strömungsabrisskante in der x-y-Ebene zumindest in dem Längenbereich ungerade ausgebildet ist, zu verstehen, dass zumindest der Längenbereich der Strömungsabrisskante in der Draufsicht, das heißt entlang einer in Fahrzeughochrichtung von unten nach oben oder von oben nach unten erfolgenden Blickrichtung ungerade ausgebildet ist.

Als besonders vorteilhaft hat es sich gezeigt, wenn die Strömungsabrisskante über ihre gesamte, in Fahrzeugquerrichtung verlaufende Erstreckung in der x-y-Ebene einen ungeraden Verlauf aufweist, das heißt ungerade ausgebildet ist. Unter dem Merkmal, dass zumindest der Längenbereich der Strömungsabrisskante in der x-y-Ebene ungerade ausgebildet ist, ist insbesondere zu verstehen, dass beispielsweise eine senkrecht zur x-y-Ebene verlaufende Projektion der Strömungsabrisskante in die Ebene zumindest in dem Längenbereich nicht etwa eine Gerade ist beziehungsweise gerade verläuft, sondern die Projektion weist zumindest in dem Längenbereich beziehungsweise in ihrem mit dem Längenbereich der Strömungsabrisskante korrespondierenden Bereich einen ungeraden Verlauf auf. An der Strömungsabrisskante löst sich bei einer Vorwärtsfahrt beziehungsweise bei der zuvor genannten Vorwärtsfahrt des Fahrzeugs die zunächst entlang des zweiten Luftleitbereichs geleitete, beziehungsweise strömende Luftströmung definiert ab, wobei dadurch, dass zumindest der Längenbereich der Strömungsabrisskante in der x-y-Ebene ungerade ausgebildet ist, der Luftwiderstand des Fahrzeugs besonders gering gehalten werden kann. Somit kann das Fahrzeug besonders energieeffizient angetrieben werden. Mit anderen Worten, bei einer Vorwärtsfahrt des Fahrzeugs strömt Luft in Fahrzeuglängsrichtung von vorne nach hinten um das Fahrzeug, wobei zumindest ein Teil der Luft entlang des Unterbodenverkleidungselements strömt. Mittels der Luftleitbereiche kann die entlang des Unterbodenverkleidungselements strömende Luftströmung besonders vorteilhaft und bedarfsgerecht geführt beziehungsweise geleitet werden.

Das Unterbodenverkleidungselement führt insbesondere dazu, dass die entlang des Unterbodenverkleidungselements strömende Luft, welche auch als Unterbodenströmung bezeichnet wird, insbesondere dann, wenn die Luft zunächst entlang des ersten Luftleitbereichs und dann entlang des zweiten Luftleitbereichs strömt, mittels des zweiten Luftleitbereichs in Fahrzeughochrichtung nach oben umgelenkt wird. Dies bedeutet, dass der zweite Luftleitbereich eine Umlenkung der Unterbodenströmung in Fahrzeughochrichtung nach oben bewirkt. Wieder mit anderen Worten ausgedrückt wird die Unterbodenströmung mittels des zweiten Luftleitbereichs zunächst, insbesondere geringfügig, in Fahrzeughochrichtung nach oben weggeführt. Daraufhin wird durch die in Fahrzeuglängsrichtung hinter dem zweiten Luftleitbereich angeordneten Strömungsabrisskante eine starke Richtungsänderung der Luftströmung in Fahrzeughochrichtung nach unten bewirkt, wodurch eine gewünschte Wirkung eines Spoilers erzielt wird. Da die Strömungsabrisskante zumindest in dem Längenbereich in der x-y-Ebene ungerade ausgebildet ist, ist eine ungleichförmige Gestaltung der Strömungsabrisskante geschaffen. Hierdurch kann der einfach auch als Widerstand bezeichnete Luftwiderstand besonders gering gehalten werden, und eine nachfolgende Scherschicht kann stabilisiert werden. Außerdem können die Strömungsabrisskante und somit das Unterbodenverkleidungselement insgesamt durch die mittels des Unterbodenverkleidungselements bewirkbaren Richtungswechsel der Luftströmung besonders stabil beziehungsweise steif ausgestaltet werden, ohne aerodynamische Nachteile zu erzeugen.

Des Weiteren kann dadurch, dass sich der zweite Luftleitbereich vorzugsweise rampenförmig in Fahrzeughochrichtung nach oben erstreckt, die Strömungsabrisskante auf einem in Fahrzeughochrichtung hinreichend hohen Niveau beginnen und sich ausgehend von diesem Niveau in Fahrzeughochrichtung nach unten erstrecken, wobei gleichzeitig eine hinreichende Bodenfreiheit des Fahrzeugs insgesamt gewährleistet werden kann. Die ungerade Ausgestaltung zumindest des Längenbereichs führt im Vergleich zu einer in der x-y-Ebene geraden Ausgestaltung der Strömungsabrisskante beziehungsweise des Längenbereichs zu einer erhöhten Scherschicht durch Mischung, das heißt zu einem Effekt analog eines Wirbelgenerators, insbesondere geometrisch in Strömungsrichtung der Luft.

Die Erfindung beruht dabei insbesondere auf folgenden Erkenntnissen: Aerodynamische Abrisskanten von Unterbodenabdeckungen wie zum Beispiel Spoiler vor Radhäusern können eine Lufteinströmung in einem jeweiligen, stromabwärts liegenden Bereich gering halten beziehungsweise im Vergleich zu einem Fahrzeug ohne eine solche Abrisskante verringern, wodurch der Luftwiderstand gering gehalten beziehungsweise verringert werden kann. Jedoch erzeugt üblicherweise die Strömungsabrisskante, insbesondere deren Form selbst, einen Widerstand für die Luftströmung, der durch die zuvor beschriebene Funktion, eine übermäßige Einströmung in stromabwärts liegende Bereiche gering zu halten, kompensiert werden muss. Eine Stabilisierung der Scherschicht könnte durch eine vollständig gerade ausgebildete Luftleitkante realisiert werden. Weiterhin sind Abrisskanten denkbar, deren Formwiderstand selbst reduziert wird, indem diese zum Beispiel in einem spitzen Winkel ähnlich einer Rampe ausgeführt werden. Diese Maßnahmen reduzieren jedoch die Bodenfreiheit und erfordern üblicherweise die Herstellung der Strömungsabrisskante aus kostenintensiven, elastischen Materialien, um Beschädigungen zu vermeiden. Aus Steifigkeitsgründen sind Endkanten von Unterbodenbauteilen häufig mit einem vertikal beziehungsweise in Fahrzeughochrichtung nach oben stehenden Teil ausgeführt. Ein Übergang ist in der Regel mit einem Radius versehen, welcher eine Einströmung in einem Bereich nach oben verstärkt und somit den Luftwiderstand erhöht.

Es wurde gefunden, dass ungerade und dabei beispielsweise sinusförmig und/oder zackenförmig, das heißt zickzackförmig gestaltete Endkanten von Körpern, insbesondere stumpfen Körpern oder Platten den Widerstand erheblich verringern können im Vergleich zu einer geraden Ausgestaltung der Endkanten. Durch eine solche, ungerade Ausgestaltung wird die Scherschicht günstig beeinflusst. Die Erfindung ermöglicht es nun insbesondere dadurch, zumindest den Längenbereich der Strömungsabrisskante ungerade auszugestalten, dass der in Fahrzeuglängsrichtung vor der Strömungsabrisskante angeordnete, zweite Luftleitbereich, insbesondere rampenartig, ansteigt. Hierdurch kann eine hinreichende Bodenfreiheit des Fahrzeugs gewährleistet werden. Außerdem kann das Unterbodenverkleidungselement besonders steif ausgestaltet werden. Des Weiteren kann ein durch die Strömungsabrisskante selbst erzeugter Luftwiderstand besonders gering gehalten werden, sodass insgesamt eine besonders vorteilhafte Aerodynamik des Fahrzeugs dargestellt werden kann.

Um den Luftwiderstand des Fahrzeugs insgesamt sowie den Luftwiderstand der Strömungsabrisskante an sich besonders gering halten sowie eine besonders vorteilhafte Steifigkeit der Strömungsabrisskante und des Unterbodenverkleidungselements insgesamt realisieren zu können, ist es bei einer Ausführungsform der Erfindung vorgesehen, dass zumindest der Längenbereich in der Ebene zickzackförmig oder wellenförmig oder mäanderförmig und somit ungerade ausgebildet ist.

Eine weitere Ausführungsform zeichnet sich dadurch aus, dass zumindest der Längenbereich in der Ebene sinusförmig und dadurch ungerade ausgebildet ist. Dadurch kann eine besonders vorteilhafte Aerodynamik des Fahrzeugs realisiert werden, da der Luftwiderstand des Fahrzeugs insgesamt sowie der Luftwiderstand der Strömungsabrisskante selbst in einem besonders geringen Rahmen gehalten werden können.

Um eine besonders vorteilhafte Steifigkeit des Unterbodenverkleidungselements realisieren und somit die entlang des Unterbodenverkleidungselements strömende Luft besonders vorteilhaft führen zu können, ist es in weiterer Ausgestaltung der Erfindung vorgesehen, dass die Strömungsabrisskante mit in Fahrzeugquerrichtung voneinander beabstandeten und aufeinanderfolgenden Rippen zum Aussteifen der Strömungsabrisskante versehen ist. Beispielsweise ist die Strömungsabrisskante einstückig mit den Rippen ausgebildet. Beispielsweise ist die Strömungsabrisskante aus einem Kunststoff gebildet und/oder durch Spritzgießen hergestellt.

Nach einer Weiterbildung der Erfindung ist vorgesehen, dass die Strömungsabrisskante eine in Fahrzeughochrichtung nach unten von dem Grundkörper abstehende Wandung aufweist.

Eine weitere Ausführungsform sieht vor, dass der zweite Luftleitbereich einstückig mit dem ersten Luftleitbereich und/oder mit der Strömungsabrisskante ausgebildet ist. Hierdurch können unerwünschte Verwirbelungen der entlang des Unterbodenverkleidungselements strömenden Luft vermieden werden.

Eine weitere Ausführungsform zeichnet sich dadurch aus, dass in Fahrzeuglängsrichtung zwischen dem zweiten Luftleitbereich und der Strömungsabrisskante ein dritter Luftleitbereich des Unterbodenverkleidungselements angeordnet ist. Dabei ist es denkbar, dass der dritte Luftleitbereich einstückig mit dem ersten Luftleitbereich und/oder einstückig mit dem zweiten Luftleitbereich und/oder einstückig mit der Strömungsabrisskante ausgebildet ist. Der dritte Luftleitbereich beginnt beispielsweise an dem hinteren Ende des zweiten Luftleitbereichs. Alternativ oder zusätzlich kann vorgesehen sein, dass die Strömungsabrisskante sich in Fahrzeuglängsrichtung nach hinten direkt an den dritten Luftleitbereich anschließt.

Vorzugsweise ist der dritte Luftleitbereich derart ausgestaltet, dass sich der dritte Luftleitbereich in der x-y-Ebene oder in einer parallel zu der x-y-Ebene verlaufenden, weiteren Ebene erstreckt. Somit ist es vorzugsweise vorgesehen, dass der dritte Luftleitbereich zumindest im Wesentlichen horizontal verläuft. Insbesondere dann, wenn sich die Strömungsabrisskante in Fahrzeuglängsrichtung nach hinten direkt an den dritten Luftleitbereich anschließt, steht beispielsweise die Strömungsabrisskante in Fahrzeughochrichtung nach unten von dem dritten Luftleitbereich ab. Schließt sich die Strömungsabrisskante in Fahrzeuglängsrichtung nach hinten direkt an den zweiten Luftleitbereich an, so kann insbesondere vorgesehen sein, dass die Strömungsabrisskante in Fahrzeughochrichtung nach unten von dem zweiten Luftleitbereich absteht.

Mittels des dritten Luftleitbereichs kann die entlang des Unterbodenverkleidungselements strömende Luft besonders vorteilhaft von dem zweiten Luftleitbereich zu der Strömungsabrisskante geführt werden, woraufhin mittels der Strömungsabrisskante gezielt und definiert ein Strömungsabriss der Luft von dem Unterbodenverkleidungselement bewirkt werden kann.

Um eine besonders vorteilhafte Aerodynamik und gleichzeitig eine besonders vorteilhafte Bodenfreiheit des Fahrzeugs zu realisieren, ist es in weiterer Ausgestaltung der Erfindung vorgesehen, dass sich der erste Luftleitbereich in der x-y-Ebene oder in einer parallel zu der x-y-Ebene verlaufenden, zweiten Ebene erstreckt.

Schließlich hat es sich als besonders vorteilhaft gezeigt, wenn der dritte Luftleitbereich in Fahrzeughochrichtung weiter oben als der erste Luftleitbereich angeordnet ist. Hierdurch kann eine besonders große, in Fahrzeughochrichtung verlaufende Bodenfreiheit des Fahrzeugs gewährleistet werden.

Vorzugsweise sind der zweite Luftleitbereich und/oder der dritte Luftleitbereich eben ausgebildet. Darunter ist insbesondere zu verstehen, dass sich der zweite beziehungsweise dritte Luftleitbereich zumindest überwiegend, insbesondere vollständig, in einer Ebene erstreckt, welche vorzugsweise schräg zur Fahrzeuglängsrichtung verläuft.

Um die Luft besonders vorteilhaft führen zu können, ist es in weiterer Ausgestaltung der Erfindung vorgesehen, dass der Luftleitbereich in Fahrzeughochrichtung nach oben oder unten gewölbt ist. Insbesondere bei Betrachtung des Unterbodenverkleidungselements in Fahrzeughochrichtung von unten nach oben ist der zweite Luftleitbereich dann, wenn er in Fahrzeughochrichtung nach unten gewölbt ist, konvex gewölbt. Ist der zweite Luftleitbereich jedoch in Fahrzeughochrichtung nach oben gewölbt, so ist dann der zweite Luftleitbereich konkav gewölbt.

Vorzugsweise ist das Unterbodenverkleidungselement aus einem Kunststoff gebildet und/oder einstückig ausgebildet, um eine besonders vorteilhafte Aerodynamik auf besonders kostengünstige und gewichtsgünstige Weise darstellen zu können.

Ein zweiter Aspekt der Erfindung betrifft eine Anordnung einer Unterbodenverkleidung an einem, vorzugsweise als selbsttragende Karosserie ausgebildeten Aufbau eines Fahrzeugs, insbesondere eines Kraftfahrzeugs. Dabei kann das Kraftfahrzeug ein als Personenkraftwagen ausgebildeter Kraftwagen sein. Bei der Anordnung ist ein auch als Unterboden bezeichneter Boden des Aufbaus in Fahrzeughochrichtung nach unten hin zumindest teilweise, insbesondere zumindest überwiegend oder vollständig, durch die Unterbodenverkleidung überdeckt und somit verkleidet. Dabei weist die Unterbodenverkleidung wenigstens ein Unterbodenverkleidungselement gemäß dem ersten Aspekt der Erfindung auf. Somit ist der Boden des Aufbaus in Fahrzeughochrichtung nach unten hin zumindest teilweise, insbesondere zumindest überwiegend oder vollständig, durch das Unterbodenverkleidungselement überdeckt beziehungsweise abgedeckt. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

In Fahrzeuglängsrichtung hinter dem Unterbodenverkleidungselement und somit hinter der Strömungsabrisskante kann eine Hinterachse des Fahrzeugs angeordnet sein. Die Hinterachse weist vorzugsweise wenigstens einen auch einfach als Lenker bezeichneten Radlenker auf, über welchen ein auch als Fahrzeugrad bezeichnetes Rad des Fahrzeugs gelenkig mit dem Aufbau gekoppelt ist. Der Lenker ist dabei beispielsweise einenends zumindest mittelbar mit dem Rad gelenkig gekoppelt. Beispielsweise ist der Radlenker einenends gelenkig mit einem Radträger gekoppelt, an welchem das Rad drehbar gelagert ist. Anderenends ist der Radlenker beispielsweise zumindest mittelbar, insbesondere direkt, gelenkig mit dem Aufbau gekoppelt. Beispielsweise ist der Radlenker anderenends direkt gelenkig mit dem Aufbau gekoppelt. Alternativ ist es denkbar, dass der Radlenker anderenends gelenkig mit einem Achsträger gekoppelt ist, welcher separat von dem Aufbau ausgebildet und an dem Aufbau gelagert ist. Der Radlenker führt das Rad und lässt beispielsweise in Fahrzeughochrichtung und relativ zu dem Aufbau erfolgende Ein- und Ausfederbewegungen des Rads zu.

Dabei ist der Radlenker vorzugsweise in Fahrzeughochrichtung nach unten hin zumindest teilweise durch ein in Fahrzeuglängsrichtung hinter dem Unterbodenverkleidungselement und somit hinter der Strömungsabrisskante angeordnetes, weiteres Verkleidungselement überdeckt. Das weitere Verkleidungselement ist beispielsweise separat von dem Lenker ausgebildet und an dem Lenker gehalten und somit mit dem Lenker relativ zu dem Aufbau mit bewegbar. Hierdurch kann eine besonders vorteilhafte Führung der Unterbodenströmung insbesondere nach hinten zu einem Diffusor gewährleistet werden.

Somit hat es sich schließlich als besonders vorteilhaft gezeigt, wenn in Fahrzeuglängsrichtung hinter der Achse der zuvor genannte Diffusor angeordnet ist. Hierdurch können eine besonders vorteilhafte Aerodynamik und eine besonders vorteilhafte Fahrdynamik des Fahrzeugs dargestellt werden.

Die oben beschriebene Unterbodengestaltung ist ohne Weiteres auch vor einem Vorderrad des Fahrzeugs einsetzbar beziehungsweise anordenbar. Auch an dieser Stelle im beziehungsweise am Fahrzeug würde die erfindungsgemäße Unterbodenverkleidung ihre vorteilhafte Wirkung entfalten.

Weitere Vorteile und Einzelheiten der Erfindung ergeben sich aus der nachfolgenden Beschreibung sowie anhand der Zeichnung. Dabei zeigen:
- Fig. 1: ausschnittsweise eine schematische und geschnittene Seitenansicht eines ersten Ausführungsbeispiels einer Unterbodenverkleidung eines Fahrzeugs, wobei die Unterbodenverkleidung ein Unterbodenverkleidungselement mit drei in Fahrzeuglängsrichtung aufeinanderfolgend angeordneten Luftleitbereichen und eine in Fahrzeuglängsrichtung nach hinten auf die Luftleitbereiche folgende Strömungsabrisskante aufweist;
- Fig. 2: ausschnittsweise eine schematische Unteransicht der Unterbodenverkleidung gemäß Fig. 1;
- Fig. 3: ausschnittsweise eine schematische und geschnittene Seitenansicht der Unterbodenverkleidung gemäß einer zweiten Ausführungsform;
- Fig. 4: ausschnittsweise eine schematische Unteransicht der Unterbodenverkleidung gemäß Fig. 3;
- Fig. 5: eine schematische und perspektivische Unteransicht des Unterbodenverkleidungselements gemäß einer dritten Ausführungsform; und
- Fig. 6: ausschnittsweise eine schematische Unteransicht des Unterbodenverkleidungselements gemäß Fig. 5.

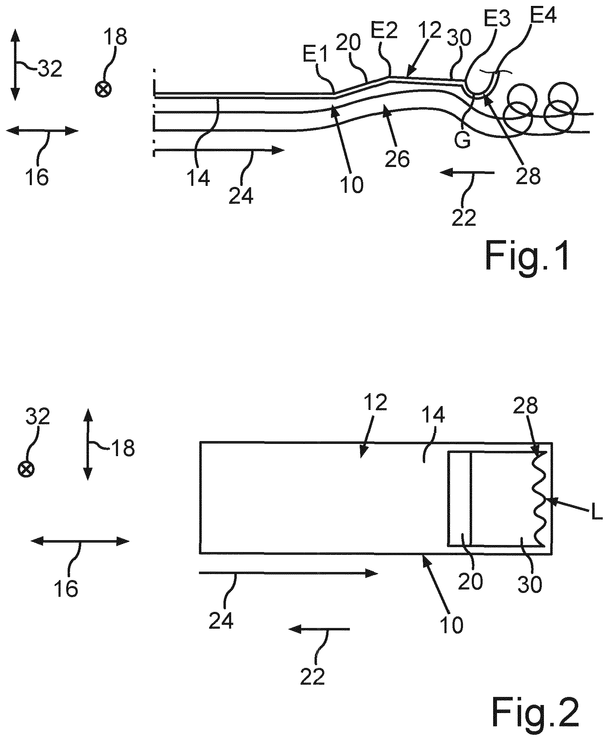

Fig. 1 zeigt ausschnittsweise in einer schematischen und geschnittenen Seitenansicht eine Unterbodenverkleidung 10 für ein vorzugsweise als Personenkraftwagen ausgebildetes Fahrzeug. Das Fahrzeug weist in seinem vollständig hergestellten Zustand einen vorzugsweise als selbsttragende Karosserie ausgebildeten Aufbau auf, welcher einen auch als Boden bezeichneten Unterboden umfasst. Durch den Unterboden ist ein auch als Innenraum bezeichneter Fahrgastraum des Fahrzeugs in Fahrzeughochrichtung nach unten hin zumindest teilweise, insbesondere zumindest überwiegend oder vollständig, begrenzt. In vollständig hergestelltem Zustand des Fahrzeugs umfasst das Fahrzeug die Unterbodenverkleidung 10, welche in Fahrzeughochrichtung unter dem Unterboden angeordnet ist. Dadurch ist der Unterboden in Fahrzeughochrichtung nach unten hin zumindest teilweise, insbesondere zumindest überwiegend oder vollständig, durch die Unterbodenverkleidung 10 abgedeckt beziehungsweise überdeckt und somit verkleidet. Die Unterbodenverkleidung 10 befindet sich also zwischen dem Karosserieboden und der Fahrbahn.

Wie besonders gut in Zusammenschau mit Fig. 2 erkennbar ist, umfasst die Unterbodenverkleidung 10 wenigstens ein Unterbodenverkleidungselement 12, durch welches der Unterboden in Fahrzeughochrichtung (z-Richtung im Fahrzeugkoordinatensystem) nach unten hin zumindest teilweise, insbesondere zumindest überwiegend oder vollständig, überdeckt ist. Beispielsweise ist das Unterbodenverkleidungselement 12 einstückig und/oder aus einem Kunststoff ausgebildet.

Das Unterbodenverkleidungselement 12 weist einen ersten Luftleitbereich 14 auf. Fig. 1 zeigt dabei eine erste Ausführungsform der Unterbodenverkleidung 10. Bei der ersten Ausführungsform ist der Luftleitbereich 14 zumindest überwiegend, insbesondere vollständig, zumindest im Wesentlichen eben ausgebildet, wobei sich der Luftleitbereich 14 in einer ersten Ebene erstreckt, die durch die Fahrzeuglängsrichtung (x-Richtung im Fahrzeugkoordinatensystem) und in Fahrzeugquerrichtung (y-Richtung im Fahrzeugkoordinatensystem) aufgespannt wird. Das bedeutet, dass der eben ausgebildete, erste Luftleitbereich 14 parallel zur Fahrbahn ausgerichtet ist. Die Fahrzeuglängsrichtung ist in Fig. 1 und 2 durch einen Doppelpfeil 16 veranschaulicht, während die Fahrzeugquerrichtung durch einen Doppelpfeil 18 veranschaulicht ist.

Das Unterbodenverkleidungselement 12 weist außerdem einen sich in Fahrzeuglängsrichtung nach hinten an den ersten Luftleitbereich 14 anschließenden, zweiten Luftleitbereich 20 auf, welcher sich in Fahrzeuglängsrichtung nach hinten direkt an den ersten Luftleitbereich 14 anschließt. Ein in Fahrzeuglängsrichtung vorderes Ende des Luftleitbereichs 20 ist in Fig.1 mit E1 bezeichnet, wobei der zweite Luftleitbereich 20 an dem Ende E1 beginnt. Der Luftleitbereich 14 endet an dem Ende E1. Außerdem ist ein in Fahrzeuglängsrichtung hinteres Ende des zweiten Luftleitbereichs 20 mit E2 bezeichnet, wobei der zweite Luftleitbereich 20 an dem hinteren Ende E2 endet. Der zweite Luftleitbereich 20 ist von dem ersten Luftleitbereich 14 abgewinkelt, derart, dass sich der zweite Luftleitbereich 20 in Fahrzeuglängsrichtung von vorne unten nach hinten oben von dem ersten Luftleitbereich 14 weg erstreckt. Der Luftleitbereich 20 ist somit analog einer Rampe beziehungsweise rampenartig ausgestaltet.

Des Weiteren ist in Fig. 1 durch einen Pfeil 22 die Vorwärtsfahrtrichtung des Fahrzeugs veranschaulicht. Wird das Fahrzeug vorwärts, das heißt in seine Vorwärtsfahrtrichtung bewegt, so wird das Fahrzeug von Luft umströmt. Dabei ist in Fig. 1 durch einen Pfeil 24 eine Strömungsrichtung der das Fahrzeug bei dessen Vorwärtsfahrt umströmenden Luft veranschaulicht. Zumindest ein Teil der das Fahrzeug bei dessen Vorwärtsfahrt umströmenden Luft strömt im Unterbodenbereich des Fahrzeugs entlang der ersten und zweiten Luftleitbereiche 14 und 20 und somit entlang des Unterbodenverkleidungselements 12. Dabei veranschaulichen in Fig. 1 auch als Strömungslinien bezeichnete Linien 26 die entlang des Unterbodenverkleidungselements 12 bei der Vorwärtsfahrt des Fahrzeugs strömende Luft, welche auch als Luftströmung oder Unterbodenströmung bezeichnet wird. Es ist erkennbar, dass die Unterbodenströmung zunächst entlang des Luftleitbereichs 14 und dabei zumindest im Wesentlichen parallel zu der ersten Ebene strömt und daraufhin mittels des Luftleitbereichs 20 in Fahrzeughochrichtung nach oben geführt wird.

Um nun eine besonders vorteilhafte Aerodynamik des Fahrzeugs realisieren zu können, weist das Unterbodenverkleidungselement 12 auch eine in Fahrzeuglängsrichtung nach hinten auf den zweiten Luftleitbereich 20 folgende Strömungsabrisskante 28 auf, an der sich bei der Vorwärtsfahrt des Fahrzeugs die entlang des zweiten Luftleitbereichs 20 geleitete Luftströmung (Unterbodenströmung) definiert ablöst. Wie in Zusammenschau mit Fig. 2 erkennbar ist, ist zumindest ein Längenbereich L der Strömungsabrisskante 28 in einer projiziert auf eine durch die Fahrzeugquerrichtung und durch die Fahrzeuglängsrichtung aufgespannten und auch als zweite Ebene bezeichneten x-y-Ebene, welche von der ersten Ebene beabstandet sein und parallel zu der ersten Ebene verlaufen kann oder mit der ersten Ebene zusammenfällt, ungerade ausgebildet.

Bei der in den Fig. 1 und 2 gezeigten ersten Ausführungsform ist die Strömungsabrisskante 28 über ihre gesamte, in Fahrzeugquerrichtung verlaufende Erstreckung in der x-y-Ebene ungerade ausgebildet. Dabei ist bei der ersten Ausführungsform die Strömungsabrisskante 28 wellenförmig und somit ungerade ausgebildet, und zwar in der x-y-Ebene. Hierdurch können der Luftwiderstand der Strömungsabrisskante 28 selbst sowie der Luftwiderstand des Fahrzeugs insgesamt gering gehalten werden, sodass das Fahrzeug besonders energieeffizient angetrieben werden kann. Insbesondere ist es denkbar, dass die Strömungsabrisskante 28 derart wellenförmig ausgebildet ist, dass die Strömungsabrisskante 28 sinusförmig ausgebildet ist. Dies bedeutet, dass die Strömungsabrisskante in der x-y-Ebene einen sinusförmigen Verlauf, das heißt einen Verlauf wie eine Sinus-Kurve aufweist.

Des Weiteren ist es bei der ersten Ausführungsform vorgesehen, dass das Unterbodenverkleidungselement 12 einen in Fahrzeuglängsrichtung zwischen dem zweiten Luftleitbereich 20 und der Strömungsabrisskante 28 angeordneten, dritten Luftleitbereich 30 aufweist. Der dritte Luftleitbereich 30 beginnt an dem Ende E2, an welchem der zweite Luftleitbereich 20 endet. Der dritte Luftleitbereich 30 endet an der Strömungsabrisskante 28, sodass die Strömungsabrisskante 28 an den dritten Luftleitbereich 30, insbesondere an dessen hinteren Ende E3, angeordnet ist beziehungsweise in Fahrzeuglängsrichtung nach hinten direkt an das Ende E3 des Luftleitbereichs 30 anschließt. Der Luftleitbereich 30 ist zumindest teilweise, insbesondere zumindest überwiegend oder vollständig, zumindest im Wesentlichen eben ausgebildet und erstreckt sich somit in einer durch die Fahrzeuglängsrichtung und die Fahrzeugquerrichtung aufgespannten, dritten Ebene. Die dritte Ebene verläuft parallel zu der ersten Ebene und ist von der ersten Ebene beabstandet. Somit ist der Luftleitbereich 30 in Fahrzeughochrichtung weiter oben als der Luftleitbereich 14 angeordnet. Außerdem weist die Strömungsabrisskante 28 einen in Fahrzeughochrichtung nach unten gewölbten Grundkörper G auf. Der Grundkörper G ist zumindest im Bereich der hier in Figur 1 dargestellten Schnittebene U-förmig ausgebildet. Aufgrund des nach unten in Richtung einer nicht dargestellten Fahrbahn abgestellten beziehungsweise zu dieser hin nach unten ragenden Grundkörpers G wird ein Ablenken der Luftströmung an der Strömungsabrisskante 28 nach unten bewirkt. Der Grundkörper G weist daher die Funktion eines Spoilers auf.

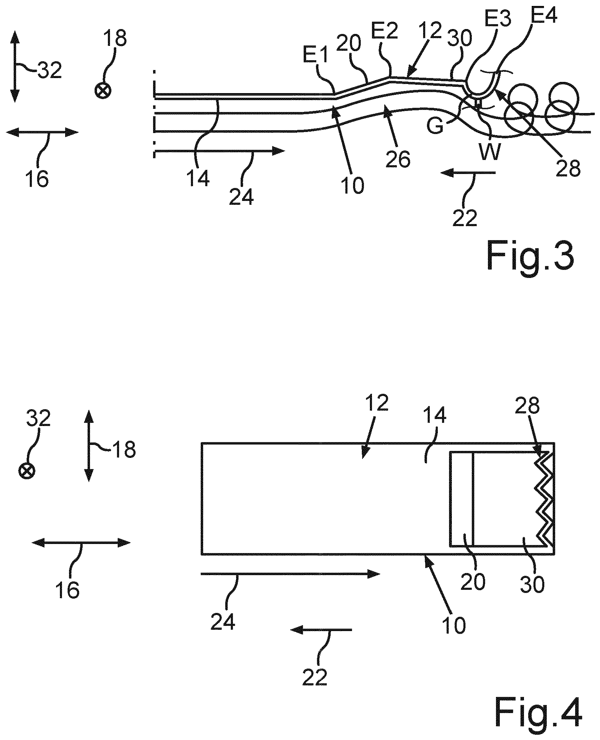

Fig. 3 und 4 zeigen eine zweite Ausführungsform der Unterbodenverkleidung, welche sich insbesondere dadurch von der ersten Ausführungsform unterscheidet, dass die Strömungsabrisskante 28 den Grundkörper G und ein in Fahrzeughochrichtung nach unten von dem Grundkörper G in Richtung der Fahrbahn abstehende Wandung W aufweist. Dabei ist die Fahrzeughochrichtung durch einen Doppelpfeil 32 veranschaulicht. Ein weiterer Unterschied zwischen der ersten Ausführungsform und der zweiten Ausführungsform ist, dass die Strömungsabrisskante 28 in der x-y-Ebene zickzackförmig, das heiß zackenförmig ausgebildet ist. Die Wandung W kann als zusätzliche, kleine Spoilerkante fungieren, um einen Strömungsabriss der Unterbodenströmung von dem Unterbodenverkleidungselement 12 sicher bewirken zu können.

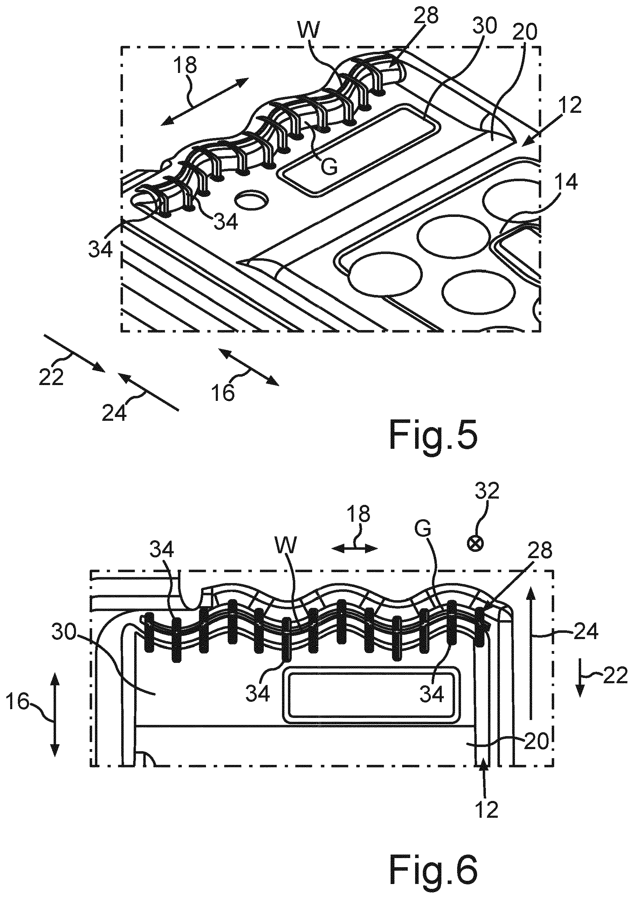

Schließlich zeigen Fig. 5 und 6 eine dritte Ausführungsform des Unterbodenverkleidungselements 12. Bei der dritten Ausführungsform ist die Strömungsabrisskante 28 wellenförmig, insbesondere sinusförmig, ausgebildet. Außerdem ist die Strömungsabrisskante 28 mit mehreren, in Fahrzeugquerrichtung voneinander beabstandeten und aufeinanderfolgenden Rippen 34 versehen. Die Rippen 34 überspannen die Strömungsabrisskante 28 in Fahrzeuglängsrichtung zumindest teilweise, insbesondere zumindest überwiegend oder vollständig, wodurch die Strömungsabrisskante 28 mittels der Rippen 34 effektiv ausgesteift beziehungsweise versteift ist. Hierdurch kann eine besonders hohe Steifigkeit des Unterbodenverkleidungselements 12 realisiert werden, und es kann ein besonders wirksamer Schutz vor Steinschlag dargestellt werden.

Es ist denkbar, dass das Unterbodenverkleidungselement 12 in Fahrzeuglängsrichtung nach hinten hin an einem in Fahrzeuglängsrichtung hinteren und vorzugsweise freien Ende E4 der Strömungsabrisskante 28 endet. Ferner ist es denkbar, dass sich in Fahrzeuglängsrichtung nach hinten ein insbesondere kleiner Wandungsbereich des Unterbodenverkleidungselements 12 an die Strömungsabrisskante 28, insbesondere an den Grundkörper G, anschließt.

## Patentansprüche

1. Unterbodenverkleidungselement (12) für ein Fahrzeug, mit einem Luftleitbereich (20), welcher an seinem in Fahrzeuglängsrichtung (16) gesehen hinteren Ende mit einer Strömungsabrisskante (28) versehen ist, an der sich bei Vorwärtsfahrt des Fahrzeugs eine entlang des Luftleitbereichs (20) geleitete Luftströmung (26) definiert ablöst, wobei zumindest ein Längenbereich (L) der Strömungsabrisskante (28) in einer projiziert auf eine durch die Fahrzeugquerrichtung (18) und die Fahrzeuglängsrichtung (16) aufgespannten Ebene ungerade ausgebildet ist,
**dadurch gekennzeichnet, dass**
der die Strömungsabrisskante (28) aufweisende Luftleitbereich (20) ein zweiter Luftleitbereich ist, welcher sich an einen ersten Luftleitbereich (14) in Fahrzeuglängsrichtung (16) nach hinten anschließt und von dem ersten Luftleitbereich (14) so abgewinkelt ist, dass dieser sich in Fahrzeuglängsrichtung (16) von vorne unten nach hinten oben von dem ersten Luftleitbereich (14) weg erstreckt, und dass die Strömungsabrisskante (28) hinter dem zweiten Luftleitbereich (20) angeordnet und einen in Fahrzeughochrichtung (32) nach unten gewölbten Grundkörper (G) aufweist, so dass mittels der Strömungsabrisskante (28) eine starke Richtungsänderung der Luftströmung in Fahrzeughochrichtung nach unten bewirkbar ist.

2. Unterbodenverkleidungselement (12) nach Anspruch 1,
**dadurch gekennzeichnet, dass**
zumindest der Längenbereich (L) in der Ebene zickzackförmig oder wellenförmig oder mäanderförmig oder sinusförmig ausgebildet ist.

3. Unterbodenverkleidungselement (10) nach einem der Ansprüche 1 oder 2,
**dadurch gekennzeichnet, dass**
die Strömungsabrisskante (28) mit in Fahrzeugquerrichtung (18) voneinander beabstandeten und aufeinanderfolgenden Rippen (34) zum Aussteifen der Strömungsabrisskante (28) versehen ist.

4. Unterbodenverkleidungselement (10) nach Anspruch 1,
**dadurch gekennzeichnet, dass**
die Strömungsabrisskante (28) eine in Fahrzeughochrichtung (32) nach unten von dem Grundkörper (G) abstehende Wandung (W) aufweist.

5. Unterbodenverkleidungselement (10) nach einem der vorhergehenden Ansprüche,
**dadurch gekennzeichnet, dass**
der zweite Luftleitbereich (20) einstückig mit dem ersten Luftleitbereich (14) und/oder mit der Strömungsabrisskante (28) ausgebildet ist.

6. Unterbodenverkleidungselement (10) nach einem der vorhergehenden Ansprüche,
**dadurch gekennzeichnet, dass**
in Fahrzeuglängsrichtung (16) zwischen dem zweiten Luftleitbereich (20) und der Strömungsabrisskante (28) ein dritter Luftleitbereich (30) angeordnet ist, welcher sich in der Ebene oder in einer parallel zu der Ebene verlaufenden, weiteren Ebene erstreckt.

7. Unterbodenverkleidungselement (10) nach einem der vorhergehenden Ansprüche,
**dadurch gekennzeichnet, dass**
sich der erste Luftleitbereich (14) in der Ebene oder in einer parallel zu der Ebene verlaufenden, zweiten Ebene erstreckt.

8. Unterbodenverkleidungselement (10) nach einem der vorhergehenden Ansprüchen,
**dadurch gekennzeichnet, dass**
der dritte Luftleitbereich (30) in Fahrzeughochrichtung (32) weiter oben als der erste Luftleitbereich (14) angeordnet ist.

9. Anordnung einer Unterbodenverkleidung (10) an einem Aufbau eines Fahrzeugs, bei welcher ein Boden des Aufbaus in Fahrzeughochrichtung (32) nach unten hin zumindest teilweise durch die Unterbodenverkleidung (10) überdeckt ist, welche wenigstens ein Unterbodenverkleidungselement (12) nach einem der vorhergehenden Ansprüche aufweist.

## Claims

1. Underbody trim element (12) for a vehicle, comprising an air-deflection region (20) which is provided, at its end which is at the rear when viewed in the vehicle longitudinal direction (16), with a flow-separation edge (28) on which, when the vehicle is moving forward, an airflow (26) deflected along the air-deflection region (20) separates in a defined manner, at least a length region (L) of the flow-separation edge (28) having an uneven shape when projected onto a plane spanned by the vehicle transverse direction (18) and the vehicle longitudinal direction (16),
**characterized in that**
the air-deflection region (20) having the flow-separation edge (28) is a second air-deflection region which adjoins a first air-deflection region (14) at the rear in the vehicle longitudinal direction (16) and is angled away from the first air-deflection region (14) in such a way that it extends in the vehicle longitudinal direction (16) from the front bottom to the rear top away from the first air-deflection region (14), **and in that** the flow-separation edge (28) is arranged behind the second air-deflection region (20) and has a main body (G) that is curved downwards in the vehicle vertical direction (32) so that an intense change in the direction of the airflow downwards in the vehicle vertical direction can be effected by means of the flow-separation edge (28).

2. Underbody trim element (12) according to claim 1,
**characterized in that**
at least the length region (L) in the plane is zigzag-shaped or wavy or meandering or sinusoidal.

3. Underbody trim element (10) according to any of claims 1 or 2,
**characterized in that**
the flow-separation edge (28) is provided with successive ribs (34), spaced apart from one another in the vehicle transverse direction (18), for reinforcing the flow-separation edge (28).

4. Underbody trim element (10) according to claim 1,
**characterized in that**
the flow-separation edge (28) has a wall (W) projecting downwards from the main body (G) in the vehicle vertical direction (32).

5. Underbody trim element (10) according to any of the preceding claims,
**characterized in that**
the second air-deflection region (20) is formed integrally with the first air-deflection region (14) and/or with the flow-separation edge (28).

6. Underbody trim element (10) according to any of the preceding claims,
**characterized in that**
in the vehicle longitudinal direction (16), between the second air-deflection region (20) and the flow-separation edge (28), a third air-deflection region (30) is arranged which extends in the plane or in a further plane running parallel to the plane.

7. Underbody trim element (10) according to any of the preceding claims,
**characterized in that**
the first air-deflection region (14) extends in the plane or in a second plane running parallel to the plane.

8. Underbody trim element (10) according to any of the preceding claims,
**characterized in that**
the third air-deflection region (30) is located further up in the vehicle vertical direction (32) than the first air-deflection region (14).

9. Arrangement of underbody trim (10) on a body of a vehicle, in which arrangement a floor of the body is at least partially covered, at the bottom in the vehicle vertical direction (32), by the underbody trim (10) which has at least one underbody trim element (12) according to any of the preceding claims.

## Revendications

1. Élément de revêtement de bas de caisse (12) pour un véhicule, comportant une zone de guidage d'air (20) qui est pourvue, à son extrémité arrière vue dans la direction longitudinale de véhicule (16), d'une arête de décrochage d'écoulement (28) sur laquelle un écoulement d'air (26) guidé le long de la zone de guidage d'air (20) se détache de manière définie lors de la marche avant du véhicule, dans lequel au moins une zone de longueur (L) de l'arête de décrochage d'écoulement (28) est réalisée de manière irrégulière dans une projection sur un plan défini par la direction transversale de véhicule (18) et la direction longitudinale de véhicule (16),
**caractérisé en ce que**
la zone de guidage d'air (20) présentant l'arête de décrochage d'écoulement (28) est une deuxième zone de guidage d'air qui se raccorde à une première zone de guidage d'air (14) vers l'arrière dans la direction longitudinale de véhicule (16) et qui est coudée par rapport à la première zone de guidage d'air (14) de telle sorte que celle-ci s'étend dans la direction longitudinale de véhicule (16) de l'avant en bas vers l'arrière en haut en s'éloignant de la première zone de guidage d'air (14), et **en ce que** l'arête de décrochage d'écoulement (28) est agencée derrière la deuxième zone de guidage d'air (20) et présente un corps de base (G) bombé vers le bas dans la direction de la hauteur de véhicule (32), de sorte qu'un fort changement de direction de l'écoulement d'air dans la direction de la hauteur de véhicule vers le bas peut être provoqué par le biais de l'arête de décrochage d'écoulement (28).

2. Élément de revêtement de bas de caisse (12) selon la revendication 1,
**caractérisé en ce que**
au moins la zone de longueur (L) est réalisée dans le plan en forme de zigzag ou d'ondulation ou de méandre ou de sinus.

3. Élément de revêtement de bas de caisse (10) selon l'une des revendications 1 ou 2, **caractérisé en ce que**
l'arête de décrochage d'écoulement (28) est pourvue de nervures (34) espacées les unes des autres et se succédant dans la direction transversale de véhicule (18) pour raidir l'arête de décrochage d'écoulement (28).

4. Élément de revêtement de bas de caisse (10) selon la revendication 1,
**caractérisé en ce que**
l'arête de décrochage d'écoulement (28) présente une paroi (W) dépassant vers le bas du corps de base (G) dans la direction de la hauteur du véhicule (32).

5. Élément de revêtement de bas de caisse (10) selon l'une des revendications précédentes,
**caractérisé en ce que**
la deuxième zone de guidage d'air (20) est réalisée d'un seul tenant avec la première zone de guidage d'air (14) et/ou avec l'arête de décrochage d'écoulement (28).

6. Élément de revêtement de bas de caisse (10) selon l'une des revendications précédentes,
**caractérisé en ce que**
dans la direction longitudinale de véhicule (16), une troisième zone de guidage d'air (30) est agencée entre la deuxième zone de guidage d'air (20) et l'arête de décrochage d'écoulement (28), laquelle troisième zone s'étend dans le plan ou dans un autre plan parallèle au plan.

7. Élément de revêtement de bas de caisse (10) selon l'une des revendications précédentes,
**caractérisé en ce que**
la première zone de guidage d'air (14) s'étend dans le plan ou dans un second plan parallèle au plan.

8. Élément de revêtement de bas de caisse (10) selon l'une des revendications précédentes,
**caractérisé en ce que**
la troisième zone de guidage d'air (30) est agencée plus haut que la première zone de guidage d'air (14) dans la direction de la hauteur de véhicule (32).

9. Agencement d'un revêtement de bas de caisse (10) sur une carrosserie d'un véhicule, dans lequel un plancher de la carrosserie est recouvert au moins partiellement vers le bas, dans la direction de la hauteur du véhicule (32), par le revêtement de bas de caisse (10), qui présente au moins un élément de revêtement de bas de caisse (12) selon l'une des revendications précédentes.
